# FASCICULE DE BREVET EUROPEEN

(11) **EP 0 597 786 B1**
(45) Date de publication et mention de la délivrance du brevet: **19.08.1998**
(21) Numéro de dépôt: 93470027.9
(22) Date de dépôt: 26.10.1993
(51) Int. Cl.: F24F 3/16

(54) **Procédé et dispositif pour le traitement des atmosphères de travail utilisant un échangeur cyclonique**
Verfahren und Vorrichtung für die Behandlung von Arbeitsatmosphären mit einem Zyklon-Wärmeaustauscher
Process and device for the treatment of work atmospheres with a cyclonic heat exchanger

(30) Priorité: 13.11.1992 FR 9213819
(43) Date de publication de la demande: 18.05.1994
(73) Titulaire: FRANCE GRIGNOTAGE, F-54110 Dombasle (FR)
(72) Inventeur: Weber, Jean-Charles, F-54110 Dombasle sur Meurthe (FR); Parmentier, Michel, F-54740 Vaudeville (FR)
(74) Mandataire: Poupon, Michel

(56) Documents cités:
- DE-A- 3 311 063
- GB-A- 2 072 326
- GB-A- 2 180 776
- US-A- 2 684 232

## Description

L'invention concerne un procédé et des moyens de mise en oeuvre pour le contrôle des atmosphères de travail et de conditionnement.

Le contrôle des atmosphères de travail et de conditionnement est devenu une nécessité technique, économique et d'environnement dans de nombreuses industries où la charge en pollutions du type poussières, particules inertes ou vivantes et même seulement d'humidité, entraîne une forte altération de la qualité recherchée. Ce traitement se fait généralement par le biais d'un système complexe de filtres associé à des désinfections, dont l'entretien est particulièrement lourd. A défaut d'un tel entretien surtout basé sur l'échange de filtres colmatés ou infectés, le système devient très rapidement, non seulement inefficace, mais de plus lui-même source de pollutions.

De telles installations sont non seulement chères à l'équipement mais également onéreuses en termes de fonctionnement car si une très grande rigueur de gestion des échanges n'est pas respectée, les systèmes deviennent rapidement inefficaces et même dangereux.

Ces opérations sont pourtant de plus en plus exigées dans des industries aussi diverses que l'industrie alimentaire, pharmaceutique, électronique, des revêtements, et bien entendu les structures hospitalières.

On a déjà décrit dans les documents GB A 2180776 et GB A 2072326 des procédés pour un traitement de dépollution de l'air qui combine les actions de déshumidification, contrôle thermique, lavage des gaz, fixation des particules et désinfection, pulvérisation et vaporisation. Toutefois, ces procédés nécessitent des dispositifs de formes complexes difficilement réalisables.

L'invention a pour objet de réaliser simultanément en une seule opération dans un appareil unique à géométrie cyclonique ou pseudo-cyclonique les fonctions suivantes :
- condensation de vapeurs en particulier d'eau donc déshumidification,
- lavage de gaz, donc dépollution,
- fixations des poussières,
- réduction des populations microbiennes,
- refroidissement ou réchauffage de l'air rejeté suivant option,
- pulvérisation et vaporisation.

L'invention consiste en l'association d'un ensemble de systèmes articulés autour d'un échangeur cyclone permettant de profiter de la particulière turbulence associée à ce type d'échangeur pour réaliser de façon concomitante le lavage des gaz et la fixation de poussières et microbes par une injection judicieuse d'eau glacée sous forme d'un aérosol contrôlé. Cette injection réalisée à débit contrôlé dans la veine d'entrée de l'air à traiter concerne un liquide aqueux ou non suivant besoin spécifique, et le liquide est éventuellement additionné d'un désinfectant ou d'un tensioactif approprié qui complète la sanitation.

L'invention consiste donc en un procédé pour un traitement de dépollution de l'air caractérisé en ce que les actions de déshumidification, contrôle thermique, lavage des gaz, fixation des particules et désinfection, pulvérisation et vaporisation sont combinées dans un seul échangeur cyclonique ou pseudo-cyclonique en comprenant les étapes suivantes :
- injecter dans la veine d'entrée du flux d'air à traiter, juste avant l'entrée tangentielle de l'échangeur, un liquide glacé sous forme d'aérosol à une température prédéterminée qui permet à la fois le lavage des gaz et la fixation des polluants solides ; et
- maintenir dans le système les conditions d'un refroidissement suffisant de l'air à traiter pour réal i ser l'équilibre d'hygrométrie recherché.

L'invention concerne également un dispositif de mise en oeuvre constitué d'un échangeur cyclonique ou pseudo-cyclonique spécialement adapté pour remplir toutes ces fonctions, selon la revendication 2.

Le liquide séparé du gaz dans le cyclone est déchargé de la base du réservoir par une électrovanne déclenchée automatiquement dès que le niveau dépasse une limite fixée.

L'échangeur qui constitue le corps du cylindre est calculé de façon à maintenir dans le système les conditions d'un refroidissement suffisant de l'air à traiter pour réaliser l'équilibre d'hygrométrie recherché. La température de l'eau injectée en amont de l'entrée est également calculée pour obtenir ce résultat.

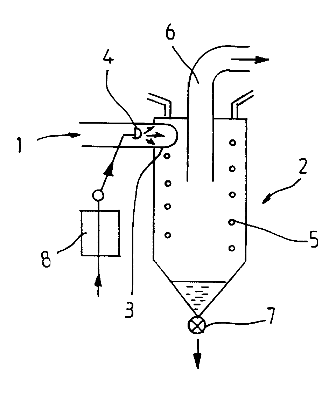

On comprendra mieux l'invention à l'aide de la description qui suit faite en référence à la figure unique annexée qui est un schéma de principe de l'appareil.

Selon l'invention, le flux d'air à traiter (1) pénètre dans l'échangeur cyclonique (2) par l'entrée tangentielle (3). Il reçoit juste avant cette entrée une injection de liquide glacé, aqueux ou non, sous forme d'aérosol par la buse (4) parfaitement calibrée à cet effet et qui accentue la dépollution. Le liquide a été refroidi dans un échangeur à eau (8).

A l'intérieur de l'échangeur (2), le flux d'air échange sa chaleur avec un ou plusieurs serpentins (5) parcourus par un fluide frigorigène approprié, puis ressort par la sortie axiale (6) pour être rejeté dans l'ambiance. A la base du système, une électrovanne (7) fonctionnant automatiquement à partir d'un capteur de niveau permet la décharge des liquides pollués retenus.

Dans une variante de l'invention, le dispositif cyclonique à proprement parler est avantageusement remplacé par un échangeur pseudo-cyclonique à entrée et sortie tangentielles, dispositif qui présente en plus l'intérêt d'une moindre perte de charge.

Les principaux avantages de l'invention sont repris ci-après.

L'association dans un tel système de la déshumidification, de l'injection d'un liquide permettant à la fois le lavage des gaz et la fixation des polluants solides de type poussières ou microbes permet de concentrer dans un seul appareil les avantages de systèmes complexes, multiples, et d'entretien lourd.

Le système suivant la présente invention est autonettoyant pour un fonctionnement autonome en périodes longues, à la seule condition que le liquide injecté par la buse en entrée reste conforme en température, quantité et composition (surfactant, désinfectant...).

Le fonctionnement en condensateur à l'intérieur de l'échangeur associé au mouvement cyclonique rend le système constamment traversé par un flux de gouttelettes de liquides très turbulent du haut vers le bas où ce liquide s'élimine continuellement. Ainsi le système n'accumule en lui-même aucune pollution, contrairement aux filtres.

Le système rejette dans l'ambiance un air dont l'hygrométrie, la température, la charge en poussières et la charge microbiologique sont contrôlées.

On notera que l'aérosol participe à l'échange thermique avec le ou les serpentins (froid ou chaud).

L'échangeur (2) peut comporter un serpentin supplémentaire chaud et l'échangeur présente alors en plus une fonction de vaporisation et fonctionne en sécheur.

## Revendications

1. Procédé pour un traitement de dépollution de l'air caractérisé en ce que les actions de déshumidification, contrôle thermique, lavage des gaz, fixation des particules et désinfection, pulvérisation et vaporisation sont combinées dans un seul échangeur cyclonique ou pseudo-cyclonique en comprenant les étapes suivantes :
- injecter dans la veine d'entrée du flux d'air à traiter, juste avant l'entrée tangentielle de l'échangeur, un liquide glacé sous forme d'aérosol à une température prédéterminée qui permet à la fois le lavage des gaz et la fixation des polluants solides ; et
- maintenir dans le système les conditions d'un refroidissement suffisant de l'air à traiter pour réaliser l'équilibre d'hygrométrie recherché.

2. Dispositif pour la mise en oeuvre du procédé selon la revendication 1, caractérisé en ce qu'il est composé d'un seul échangeur à géométrie cyclonique réalisant toutes les fonctions de déshumidification, contrôle thermique, lavage des gaz, fixation des particules, désinfection, vaporisation, ledit échangeur cyclonique comportant une entrée tangentielle (3) pour le flux d'air à traiter (1) et une sortie axiale (6) pour rejeter le flux d'air dans l'ambiance, ledit échangeur comportant une buse pour injecter dans la veine d'entrée de l'échangeur un liquide de fixation glacé sous forme d'aérosol, ledit liquide ayant été refroidi dans un échangeur à eau (8) et en ce que l'intérieur de l'échangeur comporte au moins un serpentin (5) parcouru par un fluide frigorifié.

3. Dispositif pour la mise en oeuvre du procédé selon la revendication 1, caractérisé en ce qu'il est composé d'un seul échangeur pseudo-cyclonique avec entrée et sortie tangentielles réalisant toutes les fonctions de déshumidification, contrôle thermique, lavage des gaz, fixation des particules, désinfection, vaporisation, ledit échangeur comportant une buse pour injecter dans la veine d'entrée de l'échangeur un liquide de fixation glacé sous forme d'aérosol, ledit liquide ayant été refroidi dans un échangeur à eau (8) et en ce que l'intérieur de l'échangeur comporte au moins un serpentin (5) parcouru par un fluide frigorifié.

4. Dispositif selon l'une des revendications 2 à 3, caractérisé en ce que le liquide contient un agent désinfectant.

5. Dispositif selon l'une des revendications 2 à 3, caractérisé en ce que le liquide contient un agent tensioactif.

6. Dispositif selon l'une des revendications 2 à 5, caractérisé en ce qu'il comporte à sa base une électrovanne (7) de décharge automatique.

## Patentansprüche

1. Verfahren zur reinigenden Aufbereitung von Luft, **dadurch gekennzeichnet,** daß die Vorgänge der Entfeuchtung, der Wärmeregulierung, des Gasreinigens, der Teilchenfixierung und Desinfektion, der Pulverisierung und Verdampfung in einem einzigen Zyklonaustauscher oder Pseudo-Zyklonaustauscher kombiniert und die folgenden Schritte umfaßt sind:
- Einspritzen einer eiskalten Flüssigkeit in den Eintrittskanal eines zu behandelnden Luftstromes unmittelbar vor dem tangentialen Eintritt in den Umwandler in Form eines Aerosols mit einer vorbestimmten Temperatur, das sowohl das Reinigen des Gases als auch das Fixieren fester Schadstoffe erlaubt und
- Aufrechterhalten von hinreichenden Kühlbedingungen für die zu behandelnde Luft in dem System zur Einstellung des gewünschten Gleichgewichts bei einer Feuchtigkeitsmessung.

2. Vorrichtung zur Durchführung eines Verfahrens gemäß Anspruch 1, dadurch gekennzeichnet, daß sie einen einzigen Austauscher in Form eines Zyklons umfaßt, der sämtliche Funktionen des Entfeuchtens, der Wärmeregulierung, des Gasreinigens, der Teilchenfixierung, der Desinfektion, der Verdampfung bereitstellt, wobei der Zyklonaustauscher einen tangentialen Eintritt (3) für den zu behandelnden Luftstrom (1) und einen axialen Ausgang (6) zum Abgeben des Luftstromes an die Umgebung aufweist, der besagte Austauscher über eine Düse zum Einspritzen einer eiskalten Fixierungsflüssigkeit in den Eintrittskanal des Austauschers in Form eines Aerosols verfügt und die besagte Flüssigkeit in einem Wasserkühler (8) abgekühlt worden ist, und daß das Innere des Austauschers wenigstens eine von einem tiefkühlenden Fluid durchströmte Kühlschlange (5) aufweist.

3. Vorrichtung zur Durchführung des Verfahrens gemäß Anspruch 1, dadurch gekennzeichnet, daß sie einen einzigen Pseudo-Zyklonaustauscher mit tangentialem Eingang und Ausgang umfaßt, der sämtliche Funktionen des Entfeuchtens, der Wärmeregulierung, des Gasreinigens, der Teilchenfixierung, der Desinfektion, der Verdampfung bereitstellt, wobei der besagte Austauscher über eine Düse zum Einspritzen einer eiskalten Fixierungsflüssigkeit in den Eintrittskanal des Austauschers in Form eines Aerosols verfügt und die besagte Flüssigkeit in einem Wasserkühler (8) abgekühlt worden ist, und daß das Innere des Austauschers wenigstens eine von einem tiefkühlenden Fluid durchströmte Kühlschlange (5) aufweist.

4. Vorrichtung nach einem der Ansprüche 2 oder 3, dadurch gekennzeichnet, daß die Flüssigkeit ein desinfizierendes Mittel enthält.

5. Vorrichtung nach einem der Ansprüche 2 oder 3, dadurch gekennzeichnet, daß die Flüssigkeit ein oberflächenaktives Mittel enthält.

6. Vorrichtung nach einem der Ansprüche 2 bis 5, dadurch gekennzeichnet, daß sie an ihrer Basis ein Elektroventil (7) mit einem automatischen Ablauf aufweist.

## Claims

1. Method for an air de-polluting treatment, characterised in that the actions of dehumidification, thermal control, gas washing, particle fixing and disinfection, pulverisation and vaporisation are combined in a single cyclonic or pseudo-cyclonic exchanger, said method comprising the following steps:
- injecting into the inlet vein of the air flow to be treated, just before the tangential inlet of the exchanger, a frozen liquid in the form of an aerosol at a predetermined temperature, which liquid simultaneously permits the gas washing and the fixing of the solid pollutants; and
- maintaining in the system the conditions for a sufficient cooling of the air to be treated to achieve the desired hygrometric balance.

2. Device for effecting the method according to claim 1, characterised in that it comprises a single exchanger, of cyclonic geometry, carrying out all of the operations of dehumidification, thermal control, gas washing, particle fixing, disinfection and vaporisation, said cyclonic exchanger comprising a tangential inlet (3) for the air flow to be treated (1) and an axial outlet (6) for feeding the air flow back into the atmosphere, said exchanger comprising a nozzle for injecting into the inlet vein of the exchanger a frozen fixing liquid in the form of an aerosol, said liquid having been cooled in a water exchanger (8), and in that the interior of the exchanger comprises at least one coil (5) traversed by a refrigerated fluid.

3. Device for effecting the method according to claim 1, characterised in that it comprises a single pseudo-cyclonic exchanger having a tangential inlet and a tangential outlet carrying out all of the operations of dehumidification, thermal control, gas washing, particle fixing, disinfection and vaporisation, said exchanger comprising a nozzle for injecting into the inlet vein of the exchanger a frozen fixing liquid in the form of an aerosol, said liquid having been cooled in a water exchanger (8), and in that the interior of the exchanger comprises at least one coil (5) traversed by a refrigerated fluid.

4. Device according to one of claims 2 to 3, characterised in that the liquid contains a disinfecting agent.

5. Device according to one of claims 2 to 3, characterised in that the liquid contains a surfactant.

6. Device according to one of claims 2 to 5, characterised in that it comprises, at its base, an automatic discharge solenoid (7).
